(19) **Europäisches Patentamt / European Patent Office / Office européen des brevets**

(11) **EP 4 574 324 A1**

(12) **EUROPEAN PATENT APPLICATION**
published in accordance with Art. 153(4) EPC

(43) Date of publication:
25.06.2025 Bulletin 2025/26

(21) Application number: 23894238.7

(22) Date of filing: 13.09.2023

(51) International Patent Classification (IPC):
*B23K 11/24* (2006.01)    *B23K 11/11* (2006.01)
*B23K 11/16* (2006.01)    *C22C 38/00* (2006.01)
*C22C 38/04* (2006.01)    *C22C 38/58* (2006.01)

(52) Cooperative Patent Classification (CPC):
B23K 11/11; B23K 11/16; B23K 11/24; C22C 38/00;
C22C 38/04; C22C 38/58

(86) International application number:
PCT/JP2023/033285

(87) International publication number:
WO 2024/111224 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.11.2022  JP 2022186984

(71) Applicant: JFE Steel Corporation
Tokyo 100-0011 (JP)

(72) Inventors:
• ENDO, Reiko
Tokyo 100-0011 (JP)
• TAKASHIMA, Katsutoshi
Tokyo 100-0011 (JP)

(74) Representative: Haseltine Lake Kempner LLP
Bürkleinstrasse 10
80538 München (DE)

(54) **RESISTANCE SPOT WELDING METHOD**

(57)    An object is to provide a resistance spot welding method. The present invention is a resistance spot welding method that is performed on a sheet combination of two or more overlapping steel sheets, which include at least one high strength steel sheet, to join the steel sheets together. The high strength steel sheet is a steel sheet having a specific chemical composition. The method includes a main current application step of applying a current having a current value Iw (kA) through the sheet combination to form a resistance spot weld; and a post-heat treatment step including a cooling process and a heating process, the cooling process following the main current application step and including cooling the resistance spot weld for a cooling time tc of greater than 800 ms, the heating process following the cooling process and including applying a current having a current value It of $1.05 \times Iw \leq It \leq 1.80 \times Iw$ through the resistance spot weld for a current application time tt of greater than 100 ms and 300 ms or less.

FIG. 2

## Description

Technical Field

The present invention relates to a resistance spot welding method.

Background Art

In recent years, various high strength steel sheets (high-tensile steel sheets) have been increasingly used in automobile bodies, to achieve a weight reduction for improving fuel economy and to ensure crash safety. In automobile assembly lines, the joining of members is mainly carried out by using resistance spot welding.

The joint strength of the resistance spot weld obtained by the joining using resistance spot welding is evaluated based on a tensile shear strength (TSS), which is a tensile strength in a shear direction, and a cross tension strength (CTS), which is a tensile strength in a peeling direction. The TSS of the resistance spot weld tends to increase with an increase in tensile strength of the base steel, whereas it is generally believed that the CTS may decrease when the tensile strength of the base steel is 780 MPa or greater. In instances where the CTS is decreased, a fracture mode of the resistance spot weld (weld) changes from a plug fracture, which is a ductile fracture that occurs in the base steel or a heat-affected zone (hereinafter also referred to as "HAZ") around the resistance spot weld, to an interfacial fracture or a partial plug fracture, which is a brittle fracture that occurs within the nugget. One of the causes of the decrease in CTS is, for example, hardening of a nugget edge resulting from rapid cooling as the hardening can cause a brittle fracture. To solve this problem, various studies have been conducted regarding postheating methods, which are methods that reperform current application after main current application.

Techniques for solving these problems are disclosed, for example, in Patent Literature 1 to 3. A welding method disclosed in Patent Literature 1 involves a technique for improving the CTS by cooling a nugget for a short time after main current application and subsequently performing postheating under current application conditions in which a high current is applied for a short time.

A welding method disclosed in Patent Literature 2 involves a technique for improving the CTS by performing postheating current application under current application conditions in which, immediately after welding current application is performed, a high current is applied to a weld for a short time, or by performing postheating current application under current application conditions in which, immediately after welding current application is performed, cooling is performed for a short time, and thereafter, a high current is applied to a weld for a short time.

A welding method disclosed in Patent Literature 3 involves a technique for improving the CTS by, immediately after performing welding current application, performing postheating current application that satisfies a predetermined formula, or by, immediately after performing welding current application, providing a cooling time of 20 ms to 40 ms and, thereafter, performing postheating current application that satisfies a predetermined formula.

Citation List

Patent Literature

PTL 1: Japanese Patent No. 5293227
PTL 2: Japanese Unexamined Patent Application Publication No. 2011-67853
PTL 3: Japanese Patent No. 5151615

Summary of Invention

Technical Problem

In the case of Patent Literature 1, the postheating time for postheating is extremely short. Patent Literature 1 states that if the postheating is performed for an excessively long time, the effect of improving the CTS cannot be produced. Patent Literature 1, however, does not particularly specify a chemical composition of the steel sheet used for welding. Accordingly, if the technique of

Patent Literature 1 is used to perform welding on a steel sheet (high strength steel sheet) having a chemical composition of the present invention, which will be described later, tempering of an outside of a nugget cannot be achieved because the time of postheating is short.

Patent Literature 2 and Patent Literature 3 propose a welding method in which, after welding current application is performed, postheating current application (postheating) is continuously performed without involving cooling, and also propose a welding method in which, immediately after welding current application is performed, very-short-time cooling is involved, and thereafter, postheating current application (postheating) is performed. Unfortunately, these methods cannot improve joint strength in the case of the high strength steel sheet of the present invention.

Specifically, the problem to be solved by the present invention, which will be described later, is the decrease in CTS resulting from the use of a high strength steel sheet. Steel sheets having the chemical composition used in the present invention have a high C equivalent. Accordingly, with the short-time cooling described in Patent Literature 2 or Patent Literature 3, it is impossible to promote martensite transformation in the steel sheet used in the present invention. As a result, it is impossible to ensure a CTS sought by the present invention. In addition, the technique of Patent Literature 2 is said to improve the reliability of the joint by reducing percent brittle fracture; however, in the steel sheet used in the present invention, the technique cannot cause the tempering of martensite and therefore, causes the brittle fracture surface to remain, which makes it impossible to ensure CTS and TSS strengths.

In addition, the technical concept of the cited references 2 and 3 is different from that of the present invention. In the present invention, after a nugget is formed, an outside of the nugget is heated to a temperature immediately above or close to an $Ac_1$ temperature, and thus, the heating of only the outside of the nugget can be achieved. The heating of only the outside of the nugget makes it possible to improve the toughness of the nugget edge and mitigate segregation in the nugget edge. In addition, in the present invention, the time of postheating is short, and, consequently, thermal effects on the HAZ are not significant. Accordingly, a TSS can be maintained.

In addition, in the case of spot welding methods that employ one-time current application for welding a high strength steel sheet having a tensile strength of 780 MPa or greater and a C content of 0.10 to 0.60 mass%, the problem of the decrease in CTS arises, as stated above, and, therefore, there is a need for improvement. Another problem is that if tempering postheating is performed on such a high strength steel sheet, the HAZ softens, which may result in a decrease in TSS.

The present invention has been made in view of the foregoing problems, and an object of the present invention is to provide a resistance spot welding method that can improve joint strengths (CTS and TSS); the method includes joining multiple steel sheets, which include at least one high strength steel sheet, together.

Solution to Problem

In the present invention, to solve the foregoing problems, studies were diligently conducted, by using a sheet combination including at least one high strength steel sheet, on the mechanism of the decrease in cross tension strength (hereinafter also referred to as "CTS") and methods for improving the cross tension strength, regarding resistance spot welding. In addition, methods for preventing the decrease in tensile shear strength (hereinafter also referred to as "TSS") were diligently studied.

As stated above, the CTS decreases as the strength of the steel sheet increases. When the CTS is low, the fracture mode changes from the plug fracture, which is a ductile fracture that occurs in the base steel or the HAZ around the resistance spot weld, to the interfacial fracture or the partial plug fracture, which is a brittle fracture that occurs within the nugget. Thus, ensuring a CTS is difficult in high strength steel sheets.

Factors that cause the interfacial fracture include (i) embrittlement of the nugget edge due to a hard microstructure formed by rapid cooling after the formation of the nugget and (ii) formation of cracks in the nugget edge due to embrittlement of the nugget edge caused by segregation of P and S in the nugget edge. An effective way to prevent the brittle fracture is to temper the nugget edge, thereby increasing the toughness of the microstructure of the nugget edge and mitigating segregation of P and S in the nugget edge. It is necessary to prevent, with these effects, crack propagation into the interior of the nugget.

Turning to the TSS, even in the case of the interfacial fracture, the TSS tends to be high as long as the fracture surface is ductile. However, if HAZ softening occurs, the fracture mode changes from the interfacial fracture to the partial plug fracture, the crack propagation path changes, and, consequently, the TSS may decrease.

Accordingly, in the present invention, further studies were diligently conducted to improve the CTS and TSS of the resistance spot weld obtained by using a high strength steel sheet, and as a result, the following findings were made.

Improving the CTS requires improving the toughness of the nugget edge. An effective way to improve the toughness is to temper the nugget edge.

It was found that a method for achieving this is as follows. After main current application (a main current application step, described later), a cooling process is performed to promote martensite transformation in the nugget, and subsequently, postheating with a high current is performed to cause the heating of the outside of the nugget. Accordingly, the tempering of only the outside of the nugget can be achieved. Furthermore, the heating of the outside of the nugget can mitigate the segregation of P, S, and the like and, therefore, makes it possible to comprehensively improve the toughness of the outside of the nugget. In addition, the passage of a high current can shorten the time of postheating (a post-heat treatment step, described later). Accordingly, the postheating performed with a high current for a short time makes it possible to prevent the softening of the HAZ in the vicinity of the outside of the nugget. Thus, it was found that a target CTS can be ensured while a target TSS can also be ensured.

The present invention was completed based on the above findings, and a summary of the present invention is as follows.

[1] A resistance spot welding method including holding a sheet combination of two or more overlapping steel sheets between a pair of welding electrodes and then applying a current through the sheet combination while applying a force thereto, to join the steel sheets together, the steel sheets including at least one high strength steel sheet,

the high strength steel sheet being a steel sheet having a chemical composition containing, in mass%,
C: 0.10 to 0.60%
Si: 0.1 to 2.0%
Mn: 1.5 to 4.0%
P: 0.10% or less
S: 0.005% or less
N: 0.001 to 0.010%, and
O: 0.03% or less, with the balance being Fe and incidental impurities,
the resistance spot welding method including:

a main current application step of applying a current having a current value Iw (kA) through the sheet combination to form a resistance spot weld; and
a post-heat treatment step including a cooling process and a heating process, the cooling process following the main current application step and including cooling the resistance spot weld for a cooling time tc (ms), shown in formula (1), the heating process following the cooling process and including applying a current having a current value It (kA), shown in formula (2), through the resistance spot weld for a current application time tt (ms), shown in formula (3).

$$800 < tc \qquad (1)$$

$$1.05 \times Iw \leq It \leq 1.80 \times Iw \qquad (2)$$

$$100 < tt \leq 300 \qquad (3)$$

[2] The resistance spot welding method according to [1], wherein the chemical composition of the high strength steel sheet further contains, in mass%, one or more selected from

Cu: 0.005 to 1.0%,
Ni: 1.0% or less,
Mo: 0.005 to 1.0%
Al: 2.0% or less
B: 0.0005 to 0.005%
Ca: 0.005% or less
Cr: 1.0% or less
Ti: 0.003 to 0.20%,
V: 0.005 to 0.50%, and
Nb: 0.005 to 0.20%.

[3] The resistance spot welding method according to [1] or [2], wherein the high strength steel sheet includes a galvanized layer on a surface of the steel sheet.
[4] The resistance spot welding method according to any one of [1] to [3], wherein an electrode force for the main current application step and the post-heat treatment step is fixed.

Advantageous Effects of Invention

The resistance spot welding method of the present invention performs a post-heat treatment step in which a high current is applied for a short time. Consequently, the toughness of the outside of a nugget is improved. Accordingly, the resulting welded joint can have improved joint strength, and thus, industrially significant effects are produced.

Brief Description of Drawings

[Fig. 1] Fig. 1 is a cross-sectional view illustrating an example of a resistance spot welding method of the present invention.
[Fig. 2] Fig. 2 is a chart illustrating an example of a current application pattern of a resistance spot welding method of the present invention.

Description of Embodiments

A resistance spot welding method of the present invention will be described below with reference to the drawings. The present invention is not limited to this embodiment.

First, the technical concept of the present invention will be described in detail.

As stated above, it is known that spot welding methods that employ one-time current application to weld a high strength steel sheet having a tensile strength of 780 MPa or greater and a C content of 0.10 to 0.60 mass% cause a decrease in CTS. It is also known that if tempering postheating is performed on the high strength steel sheet, the TSS may decrease as a result of the softening of the HAZ.

Accordingly, in the present invention, to solve these problems, attention was focused particularly on current application conditions for a post-heat treatment step, to control temperatures during the welding. Specifically, attention was focused on a step of performing cooling for causing martensite transformation in the microstructure of an outside of the nugget (a cooling process, described later); and a step of performing current application for heating only the outside of the nugget (a heating process, described later).

First, a main current application step is performed to form a nugget on a steel sheet faying surface in a sheet combination of two or more overlapping steel sheets, which include at least one high strength steel sheet; specifically, the sheet combination is heated to a temperature greater than or equal to a melting point by the application of a current. Subsequently, the post-heat treatment step is performed to improve the toughness of the outside of the nugget. The post-heat treatment step includes the cooling process for promoting martensite transformation in the molten nugget and the heating process following the cooling process; the heating process is postheating for reheating only the outside of the nugget. This postheating involves rapid heating.

This postheating causes the outside of the nugget edge to be heated (reheated), and consequently, only the outside of the nugget edge is tempered. As a result, the toughness of the nugget edge is improved. Accordingly, the CTS can be improved.

In addition, since the time of the postheating is short, the microstructure of the HAZ is not substantially affected, and, therefore, the HAZ does not soften. As a result, the decrease in TSS can be prevented. Furthermore, since the postheating is a one-time current application process, the effect of tempering due to postheating is achieved with the minimum process. Consequently, it is possible to avoid the decrease in TSS without causing the softening of the HAZ. Furthermore, the current application time can be shortened.

Thus, the present inventors discovered that by properly performing temperature control during welding, in particular, in the post-heat treatment step, it is possible to achieve both a CTS and a TSS under certain welding conditions, even in instances in which resistance spot welding is performed on a high strength steel sheet such as that described above.

Now, an embodiment of the resistance spot welding method of the present invention will be described.

The present invention is a resistance spot welding method including preparing a sheet combination of two or more overlapping steel sheets including at least one high strength steel sheet; holding the sheet combination between a pair of welding electrodes; and applying a current through the sheet combination according to a current application pattern, described later, while applying a force to the sheet combination with the welding electrodes, thereby forming a nugget and joining the steel sheets together. The high strength steel sheet is a steel sheet having a chemical composition described below. The number of the overlapping steel sheets is not particularly limited and may be any number greater than or equal to 2. The upper limit of the number of the overlapping steel sheets is not particularly limited and is preferably less than or equal to 4.

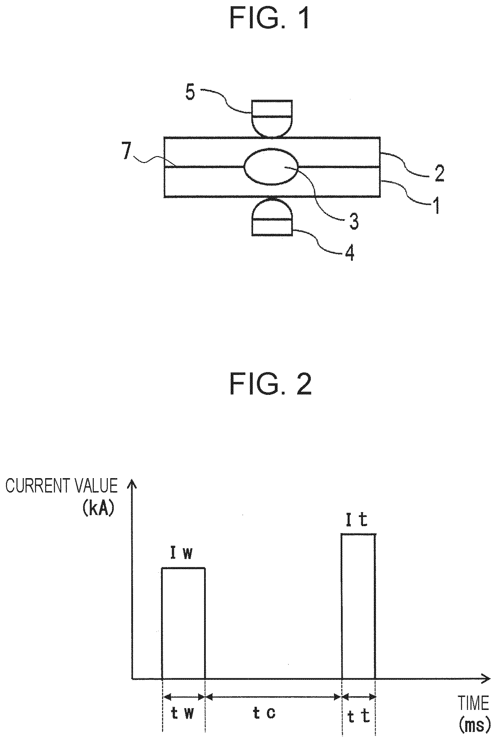

Fig. 1 illustrates an example in which two steel sheets are subjected to resistance spot welding. First, as illustrated in Fig. 1, a sheet combination of two overlapping steel sheets 1 and 2 is prepared. Next, the sheet combination is held between a pair of welding electrodes 4 and 5 (lower electrode and upper electrode), which are positioned below and above the sheet combination, and in this state, a current is applied through the sheet combination while a force is applied thereto, with control being performed such that predetermined welding conditions can be satisfied. Thus, resistance heat is generated, by which a sheet gap that becomes a steel sheet faying surface 7 is joined to form a resistance spot weld. In this manner, a welded joint can be obtained. When the sheet combination is, for example, made up of a high strength cold rolled steel sheet and a galvanized steel sheet that overlap with each other, the two overlapping steel sheets may be those in which a surface of the high strength galvanized steel sheet that has the galvanized layer faces the high strength cold rolled steel sheet.

Devices that implement the resistance spot welding method of the present invention may have any configuration for applying a force with the lower electrode and the upper electrode and controlling an electrode force, and thus, the configuration is not particularly limited. For example, a device such as an air cylinder or a servo motor may be used. Furthermore, for the current application, the configuration for supplying the current and controlling the current value is also not particularly limited, and the present invention can be used in either case of a direct current or an alternating current. In the case of the alternating current, the "current" means an "effective current".

The lower electrode and the upper electrode may have any type of tip. Examples thereof include a dome radius type (DR type), a radius type (R type), or a dome type (D type), which are specified in JIS C 9304: 1999. Each of the electrodes has a tip diameter of, for example, 4 mm to 16 mm. The tip has a radius of curvature of, for example, 10 mm to 400 mm. Alternatively, a flat-type electrode having a flat tip may be employed.

[High Strength Steel Sheet]

Regarding the high strength steel sheet used in the present invention, reasons for limiting a chemical composition of its base steel will be described. In the descriptions below, the expression "%" in the chemical composition is "mass%" unless otherwise specified.

C: 0.10 to 0.60%

C is an element that contributes to strengthening steel. If a C content is less than 0.10%, the resulting strength of the steel is low, and, therefore, producing a steel sheet having a tensile strength of 780 MPa or greater is very difficult. On the other hand, if the C content is greater than 0.60%, the resulting steel sheet has a high strength, but an amount of hard martensite in a melted portion of a welded joint is excessively increased, which results in an increase in microvoids. In addition, the nugget and the HAZ around the nugget are excessively hardened and are increasingly embrittled, and, therefore, it is difficult to improve the CTS. Accordingly, the C content is specified to be 0.10 to 0.60%. The C content is preferably 0.12% or greater and preferably 0.45% or less.

Si: 0.1 to 2.0%

When a Si content is 0.1% or greater, a useful effect of strengthening steel is produced. Furthermore, since Si is a ferrite-forming element, Si acts advantageously for the formation of ferrite in the nugget edge. On the other hand, if the Si content is greater than 2.0%, toughness may be adversely affected although the strengthening of steel is achieved. Accordingly, the Si content is specified to be 0.1 to 2.0%. The Si content is preferably 0.2% or greater and preferably 1.8% or less.

Mn: 1.5 to 4.0%

When a Mn content is less than 1.5%, a high joint strength can be achieved even if cooling for an extended period of time, as is done in the present invention, is not performed. On the other hand, if the Mn content is greater than 4.0%, embrittlement or cracking resulting from embrittlement significantly occurs in the resistance spot weld, and, therefore, it is difficult to improve the joint strength. Accordingly, the Mn content is specified to be 1.5 to 4.0%. The Mn content is preferably 2.0% or greater and preferably 3.5% or less.

P: 0.10% or less

P is an incidental impurity. If a P content is greater than 0.10%, strong segregation appears in the nugget edge of the resistance spot weld, and, therefore, it is difficult to improve the joint strength. Accordingly, the P content is specified to be 0.10% or less. The P content is preferably 0.05% or less and more preferably 0.02% or less. The lower limit of the P content is not particularly limited.

However, since excessive reduction results in an increase in cost, it is preferable that the P content be 0.005% or greater.

S: 0.005% or less

S is an element that embrittles steel by segregating at grain boundaries. In addition, S reduces the local deformability of a sulfide and the steel sheet. Accordingly, a S content is specified to be 0.005% or less. The S content is preferably 0.004% or less and more preferably 0.003% or less. The lower limit of the S content is not particularly limited. However, since excessive reduction results in an increase in cost, it is preferable that the S content be 0.001% or greater.

N: 0.001 to 0.010%

N is an element that degrades the aging resistance of steel. N is an element that is incidentally present. Accordingly, a N content is specified to be 0.001 to 0.010%. The N content is preferably 0.008% or less.

O: 0.03% or less

O (oxygen) is an element that degrades the cleanliness and toughness of steel by forming non-metallic inclusions. An O content is specified to be 0.03% or less. The O content is more preferably 0.02% or less. Furthermore, the O content is preferably 0.005% or greater.

The high strength steel sheet used in the present invention contains the elements described above, with the balance being Fe and incidental impurities.

In the present invention, the chemical composition described above is a basic chemical composition of the high strength steel sheet. In the present invention, one or more elements selected from Cu, Ni, Mo, Al, B, Ca, Cr, Ti, V, and Nb may be added as necessary to the chemical composition described above.

Cu: 0.005 to 1.0%, Ni: 1.0% or less, and Mo: 0.005 to 1.0%

Cu, Ni, and Mo are elements that can contribute to improving the strength of steel. However, addition of a large amount degrades toughness. Accordingly, in instances where these elements are included, it is preferable that a Cu content be 0.005 to 1.0%, Ni be in an amount of 1.0% or less, and Mo be in an amount of 0.005 to 1.0%. The Cu content is more preferably 0.8% or less and preferably 0.006% or greater. The Ni content is more preferably 0.8% or less and preferably 0.01% or greater. The Mo content is more preferably 0.8% or less and preferably 0.006% or greater.

Al: 2.0% or less

Al is an element that can control the microstructure to refine austenite grains; however, addition of a large amount degrades toughness. Accordingly, in instances where Al is included, it is preferable that an Al content be 2.0% or less. The Al content is more preferably 1.5% or less. The Al content is preferably 0.01% or greater and more preferably 0.03% or greater.

B: 0.0005 to 0.005%

B is an element that can strengthen steel by improving hardenability. Accordingly, in instances where B is included, it is preferable that a B content be 0.0005% or greater. The B content is more preferably 0.0007% or greater. However, even if a large amount of B is added, the effect no longer increases. Accordingly, the B content is specified to be 0.005% or less. The B content is more preferably 0.0010% or less.

Ca: 0.005% or less

Ca is an element that can contribute to improving the formability of steel. However, addition of a large amount degrades toughness. Accordingly, in instances where Ca is included, it is preferable that a Ca content be 0.005% or less. The Ca content is more preferably 0.004% or less and preferably 0.001% or greater.

Cr: 1.0% or less

Cr is an element that can improve strength by improving hardenability. However, if Cr is included in an excessive amount of greater than 1.0%, the toughness of the HAZ may be degraded. Accordingly, in instances where Cr is included, it is preferable that a Cr content be 1.0% or less. The Cr content is more preferably 0.8% or less and preferably 0.01% or greater.

Ti: 0.003 to 0.20%

Ti is an element that can strengthen steel by improving hardenability. However, addition of a large amount results in the formation of carbides, and precipitation hardening due to the carbides significantly degrades toughness. Accordingly, in instances where Ti is included, it is preferable that a Ti content be 0.003 to 0.20%. The Ti content is more preferably 0.15% or less and more preferably 0.004% or greater.

V: 0.005 to 0.50%

V is an element that can strengthen steel by controlling the microstructure through precipitation hardening. However, addition of a large amount leads to degradation of the toughness of the HAZ. Accordingly, in instances where V is included, it is preferable that a V content be 0.005 to 0.50%. The V content is more preferably 0.30% or less and more preferably 0.006% or greater.

Nb: 0.005 to 0.20%

Nb improves post-resistance-spot-welding CTS and delayed fracture resistance by forming fine carbonitrides. When this effect is to be produced, Nb is included in an amount of 0.005% or greater. On the other hand, addition of a large amount of Nb significantly reduces elongation and, in addition, significantly compromises toughness. Thus, a Nb content is specified to be 0.20% or less. Accordingly, in instances where Nb is included, it is preferable that the Nb content be 0.005 to 0.20%. The Nb content is more preferably 0.18% or less, even more preferably 0.15% or less, and still more preferably 0.10% or less. The Nb content is more preferably 0.006% or greater and even more preferably 0.007% or greater.

The high strength steel sheet having the chemical composition described above can have a tensile strength of a 780 MPa class or greater. Preferably, the tensile strength of the high strength steel sheet is in a 1180 MPa class or greater. The upper limit of the tensile strength is not particularly specified, and preferably, the tensile strength of the high strength steel sheet is in a 1800 MPa class or less. The "780 MPa class" means a tensile strength of 600 to 850 MPa, the "1180 MPa class" means a tensile strength of 1050 to 1300 MPa, and the "1800 MPa class" means a tensile strength of 1700 to 1900 MPa.

As stated above, when the tensile strength of the base steel is 780 MPa or greater, there is a concern that the CTS may decrease. In the present invention, even high strength steel sheets having a tensile strength of the 780 MPa class or greater have improved toughness of the nugget edge, which is achieved by the tempering of the outside of the nugget edge. In addition, since the current application performed with a high current and for a short time has low impact on the HAZ, it is possible to prevent a decrease in TSS. Consequently, brittle fractures of the nugget edge can be prevented. Accordingly, a decrease in CTS and a decrease in TSS in the resistance spot weld can be inhibited. These effects can also be produced in high strength steel sheets having a tensile strength less than 780 MPa, as might be expected.

[Type of Coating of High Strength Steel Sheet]

The high strength steel sheet of the present invention may be a steel sheet that has been treated by a galvanizing treatment and thus has a galvanized layer on a surface of the steel sheet (galvanized steel sheet). In this case, the above-described effects can also be produced. The "galvanized layer" is a coated layer formed primarily of zinc. Examples of the coated layer formed primarily of zinc include hot-dip galvanized layers, electrogalvanized layers, Zn-Al coated layers, and Zn-Ni layers. Furthermore, the high strength steel sheet of the present invention may be a galvannealed steel sheet that has been treated by an alloying treatment after being treated by the galvanizing treatment and thus has a galvannealed layer on a surface of the base steel (GA steel sheet).

In the present invention, the overlapping steel sheets may be two or more overlapping steel sheets of the same type or may be two or more overlapping steel sheets of different types. One or more of the overlapping steel sheets may be a steel sheet having a galvanized layer on a surface of the steel sheet (surface-treated steel sheet), and the other or others may be a steel sheet having no galvanized layer on a surface of the steel sheet (cold rolled steel sheet). The steel sheets may have the same sheet thickness or different sheet thicknesses. From the standpoint that the steel sheet of interest is a common automotive steel sheet, it is preferable that the sheet thickness of the steel sheet be 0.4 mm to 2.2 mm, for example.

Now, the current application pattern of the resistance spot welding method of the present invention will be described.

In the present invention, a sheet combination of two or more overlapping steel sheets that include at least one high strength steel sheet is held between a pair of welding electrodes, and a current is applied through the sheet combination while a force is applied thereto, to join the steel sheets together. The current application involves a main current application step and a post-heat treatment step. Each of the steps of the present invention will be described in detail below.

<Main Current Application Step>

The main current application step is a step of forming a nugget 3 of a required size by melting the steel sheet faying surface 7 of the steel sheets 1 and 2 that constitute the sheet combination (see Fig. 1). In the main current application step, a resistance spot weld (nugget) is formed by applying a current having a current value Iw (kA) through the sheet combination.

In general, a nugget diameter employed in resistance spot welds of automotive steel sheets is 3.0 √t (mm) to 6.0 √t (mm) (t (mm) is the sheet thickness). In the present invention, this numerical range is designated as a "target nugget diameter". The main current application step of the present invention allows any condition that enables the production of a nugget 3 having the target nugget diameter. For the formation of the nugget 3, current application conditions and force application conditions are not particularly limited.

From the standpoint of consistently forming the nugget 3 having the target nugget diameter, on the steel sheet faying surface, by using the high strength steel sheet of the present invention as at least one of the overlapping steel sheets, it is preferable that the current application conditions and the force application conditions of the main current application step be controlled as follows.

The current value Iw (kA) of the main current application step is preferably 3.0 kA to 8.0 kA. If the current value Iw is excessively low, the target nugget diameter cannot be consistently obtained. On the other hand, if the current value Iw is excessively high, the nugget diameter may excessively increase, or the nugget diameter may decrease if an increase in the degree of melting of the steel sheet causes a splash of the molten resistance spot weld to escape from the sheet gap. For these reasons, the current value Iw is specified to be 3.0 kA to 8.0 kA. The current value Iw is more preferably 4.5 kA or greater and more preferably 7.5 kA or less. However, the current value Iw may be less than or greater than values within the above-mentioned numerical range as long as the required nugget diameter can be obtained.

A current application time tw (ms) of the main current application step is preferably 120 ms to 400 ms. This is a time for consistently forming the nugget 3 having the target nugget diameter, as described above for the current value Iw. If the current application time tw is less than 120 ms, there is a concern that the nugget cannot be easily formed. On the other hand, if the current application time tw is greater than 400 ms, there are concerns that the resulting nugget diameter may be greater than the target nugget diameter and that ease of operation may decrease. However, the current application time tw may be less than or greater than values within the above-mentioned numerical range as long as the required nugget diameter can be obtained.

Regarding the force application conditions of the main current application step, the electrode force is preferably 2.0 kN to 7.0 kN. If the electrode force is excessively high, a current path diameter increases, and, consequently, it becomes difficult to ensure a nugget diameter. On the other hand, if the electrode force is excessively low, the current path diameter decreases, and, consequently, splashing is likely to occur. For these reasons, the electrode force is specified to be 2.0 kN to 7.0 kN. The electrode force is more preferably 3.0 kN or greater and more preferably 6.5 kN or less. The electrode force may be limited by the ability of the device used. The electrode force may be less than or greater than values within the above-mentioned numerical range as long as the electrode force is sufficient to obtain the required nugget diameter.

<Post-Heat Treatment Step>

The post-heat treatment step is a step of post-heat treatment for tempering the outside of the nugget edge of the resistance spot weld formed in the main current application step. In the post-heat treatment step, which is performed after the main current application step, the cooling process and the heating process are performed in this order on the nugget edge. To produce the effect of improving the toughness of the outside of the nugget edge, it is important to control the welding conditions of each of the processes of the post-heat treatment step as follows.

[Cooling Process]

First, cooling is performed to reduce the temperature of the outside of the nugget to a temperature at which martensite transformation occurs in the nugget edge (cooling process). In this cooling process, the resistance spot weld is cooled by being held in a state in which no current is applied thereto, for a cooling time tc (ms), shown in formula (1), to produce a tempering effect that will be described later.

$$800 < t_c \qquad (1)$$

If the cooling time tc (ms) of the cooling process is 800 ms or less, martensite transformation does not sufficiently occur, and, consequently, because of the absence of the appearance of martensite, the outside of the nugget has a microstructure in which austenite remains. Thus, despite the subsequent heating process, the austenite remains and eventually becomes a martensite structure. As a result, the nugget edge has a brittle microstructure, and, therefore, the CTS and the TSS are not improved. Accordingly, the cooling time tc (ms) is specified to be greater than 800 ms. The cooling time tc is preferably 850 ms or greater and more preferably 900 ms or greater.

The upper limit of the cooling time tc (ms) of the cooling process is not particularly limited. Since the steel sheet of interest in the present invention is an automotive steel sheet, a long welding time leads to a decrease in operation efficiency. Accordingly, the cooling time tc (ms) is preferably 2200 ms or less, more preferably 2000 ms or less, and even more preferably 1900 ms or less.

Regarding the force application conditions of the cooling process of the post-heat treatment step, it is preferable that the electrode force be fixed. The higher the electrode force, the greater the degree to which cooling is promoted, and the greater the ease with which martensite transformation occurs; however, if the electrode force is greater than 7.0 kN, the excessively high electrode force may increase the likelihood that the electrodes wear. Accordingly, depending on the situation, it may become necessary to increase the frequency of electrode replacement, and, consequently, production capacity may decrease. On the other hand, if the electrode force is less than 3.0 kN, martensite transformation does not easily occur, and, consequently, it is impossible to obtain the specified weld in the subsequent postheating step. For these reasons, the electrode force for the cooling process is specified to be 3.0 kN to 7.0 kN. The electrode force for the cooling process is more preferably 3.5 kN or greater and more preferably 6.5 kN or less.

[Heating Process]

After the cooling process, the heating process is performed. In the heating process, which follows the cooling process that cools the nugget edge to a temperature at which martensite transformation occurs, current application (postheating) for heating the nugget edge to an appropriate temperature range is performed to temper the martensitized microstructure. The "appropriate temperature range" is a temperature range for tempering only the outside of the nugget edge.

Specifically, in the heating process, a current having a current value It (kA), shown in formula (2), is applied through the resistance spot weld for a current application time tt (ms), shown in formula (3).

$$1.05 \times \text{Iw} \leq \text{It} \leq 1.80 \times \text{Iw} \qquad (2)$$

$$100 < \text{tt} \leq 300 \qquad (3)$$

In the present invention, by performing current application with a high current for a short time in the heating process, the tempering of only the outside of the nugget edge can be achieved. A reason for this is that the rapid heating to a temperature immediately below the $Ac_1$ temperature makes it possible to slightly temper the outside of the nugget edge. In addition, since the current application is performed with a high current for a short time, the HAZ is substantially not affected by the tempering. Consequently, the softening of the HAZ does not occur, which makes the change in the TSS fracture mode unlikely to occur, and as a result, the decrease in TSS can be prevented.

If the current value It for this process is excessively low, the tempering of the outside of the nugget edge cannot be substantially achieved, which results in embrittlement of martensite, and as a result, the CTS cannot be improved. On the other hand, if the current value It for this process is excessively high, a melting point is exceeded, which leads to the occurrence of splashing, and as a result, the predetermined nugget diameter cannot be ensured. Accordingly, it is important to properly control the temperature so that only the outside of the nugget edge can be heated.

If the current application time tt for this process is excessively long, the temperature for the postheating increases excessively, that is, the temperature of the outside of the nugget increases again to the austenite single-phase region. As a result, the austenite is highly likely to eventually transform into martensite. Furthermore, if the temperature is excessively high, splashing may occur, and thus, the required nugget diameter may not be obtained. On the other hand, if the current application time tt for this process is excessively short, the tempering of the outside of the nugget edge cannot be substantially achieved.

For these reasons, the current value It (kA) for the heating process is specified to satisfy the relationship of formula (2), shown above. If the current value It of the heating process is less than (1.05 × Iw) (kA), where Iw is the current value of the main current application step, the resulting temperature of the outside of the nugget edge is less than the $Ac_1$ temperature, and, consequently, the nugget edge cannot be tempered effectively. The current value It of the heating process is preferably (1.06 × Iw) (kA) or greater and more preferably (1.10 × Iw) (kA) or greater.

On the other hand, if the current value It of the heating process is greater than (1.80 × Iw) (kA), where Iw is the current value of the main current application step, the resulting temperature is greater than the $Ac_3$ temperature of the steel sheet, and, consequently, the temperature of the outside of the nugget edge increases to the austenite single-phase. As a result, the outside of the nugget edge eventually has martensite. In addition, it is highly likely that the melting point is exceeded; thus, splashing occurs in the heating process, and, consequently, the predetermined nugget diameter cannot be obtained. That is, the tempering of the outside of the nugget edge cannot be achieved, and as a result, a toughness of the nugget edge cannot be obtained. The current value It of the heating process is preferably (1.75 × Iw) (kA) or less and more preferably (1.50 × Iw) (kA) or less.

To rapidly increase the temperature in a short time as stated above, the current application time tt (ms) for the heating process is specified to satisfy the relationship of formula (3), shown above. If the current application time tt is 100 ms or less, the temperature that is the $Ac_1$ temperature or less is excessively short, and, consequently, the tempering of the outside of the nugget edge cannot be achieved. On the other hand, if the current application time tt is greater than 300 ms, the $Ac_3$ temperature of the steel sheet is exceeded, and, consequently, the temperature of the outside of the nugget edge increases to the austenite single-phase; as a result, the outside of the nugget edge eventually has martensite. In addition, splashing occurs in the heating process, and as a result, the predetermined nugget diameter cannot be obtained. The current application time tt is preferably 120 ms or greater and preferably 280 ms or less.

Regarding the force application conditions of the heating process of the post-heat treatment step, it is preferable that the electrode force be fixed. If the electrode force is greater than 7.0 kN, the temperature may increase to a temperature range in which splashing occurs during the postheating. As a result, the tempering of the outside of the nugget cannot be achieved by the postheating, and, consequently, martensite transformation occurs after the postheating. Furthermore, the required nugget diameter may not be obtained. On the other hand, if the electrode force is less than 3.0 kN, splashing occurs at a low current value, and, therefore, the required nugget diameter cannot be obtained. For these reasons, the electrode force for the heating process is specified to be 3.0 kN to 7.0 kN. The electrode force for the heating process is more preferably 3.5 kN or greater and more preferably 6.5 kN or less.

In the present invention, it is more preferable that the electrode force be within the numerical range of each of the steps described above and that the electrode force be fixed throughout the main current application step and the post-heat treatment step. A reason for this is that control can be easily performed because it is sufficient that the welding conditions be set such that the formulae described above can be satisfied to achieve the target temperature. If the control is performed such that the force in the main current application step and the post-heat treatment step can be varied, the optimal ranges of the current application time and the current value for the postheating are changed, which makes it difficult to identify the optimal welding conditions under which the target temperature can be achieved. For these reasons, it is preferable that the electrode force be fixed for all the steps (main current application step and post-heat treatment step).

In the present invention, it is preferable that the nugget diameter of the resistance spot weld resulting from the post-heat treatment step be within a range of 3.0 √t (mm) to 5.5 √t (mm) so as to ensure sufficient joint strengths (CTS and TTS). The nugget diameter may be greater than values within this numerical range because the larger the nugget diameter, the greater the degree of improvement in the joint strengths.

As described above, in the resistance spot welding method of the present invention, the appropriate control of the welding conditions of the post-heat treatment step enables the temperature of the outside of the nugget edge to become greater than the $Ac_1$ temperature, and thus, only the outside of the nugget edge is tempered. Consequently, the resulting welded joint has improved toughness in the outside of the nugget edge and, therefore, can have improved CTS. In addition, because of the current application performed with a high current for a short time, the HAZ is substantially not affected by the tempering due to postheating, and, consequently, the softening of the HAZ does not occur, which makes it possible to prevent a decrease in TSS. That is, even in the instance where welding is performed on a sheet combination including a high strength steel sheet having the above-described chemical composition, the joint strengths (CTS and TSS) can be improved.

EXAMPLES

Now, operations and effects of the present invention will be described with reference to Examples. The present invention is not limited to the Examples described below.

Test specimens were prepared from steel sheets (Steel sheets A to N) having a tensile strength of a 780 MPa to 1800 MPa class and a sheet thickness of 0.8 to 1.2 mm, as shown in Tables 1 and 2. The test specimens had a size of 150 mm (long side) and 50 mm (short side). Table 1 shows the chemical composition of Steel sheets A to N. In Table 1, "-" means that the element was not present as an intentionally added element and, thus, indicates both the case in which the element was not present (0%) and the case in which the element was incidentally present. The "GA steel sheet", indicated in Table 2, is the galvannealed steel sheet described above. Regarding the tensile strengths, the "980 MPa class" means a tensile strength of 900 to 1050 MPa, and the "1470 MPa class" means a tensile strength of 1400 to 1550 MPa. The tensile strengths of the "780 MPa class", the "1180 MPa class", and the "1800 MPa class" have been described above and, therefore, are not described here.

In the present example, resistance spot welding was performed on a sheet combination by using a resistance welding device attached to a C gun. The resistance welding device was of a servo-motor-force-application type and included a DC power supply. As illustrated in Fig. 1, the sheet combination included two or more steel sheets (in the example illustrated in Fig. 1, the lower steel sheet 1 and the upper steel sheet 2).

First, the sheet combination was prepared by positioning the obtained test specimens in an overlapping manner as shown in Table 2. In Table 2, regarding the "Overlapping Steel Sheet Positions", the steel sheets are referred to as "first sheet", "second sheet", and so on, starting from the lower side. Some of the sheet combinations included three overlapping steel sheets. Next, resistance spot welding was performed on each of the sheet combinations under the welding conditions shown in Table 3, to form a nugget 3 of a required size in the sheet gap, thereby producing a resistance spot welded joint. In Table 3, "-" means that the process was not performed.

The other welding conditions were as follows. During the current application, the electrode force was fixed at 3.5 kN. The welding electrode 4, positioned below the sheet combination, and the welding electrode 5, positioned above the sheet combination, both had a tip diameter of 6 mm and a tip radius of curvature of 40 mm and were DR type electrodes made of a copper-chromium alloy. The welding was performed with a DC power supply while controlling the electrode force with the lower welding electrode 4 and the upper welding electrode 5. The resistance spot weld was formed such that the weld could have a nugget diameter of 5.5 $\sqrt{t}$ (mm) or less, where t (mm) was the sheet thickness, after completion of the welding.

The CTS of the obtained resistance spot welded joints was evaluated by performing a cross tension test in the manner described below. Furthermore, the TSS was evaluated by performing a shear-tension test in the manner described below.

[Evaluation of CTS]

The evaluation of CTS was performed based on the cross-tension test. The CTS (cross tension strength) was measured by performing a cross-tension test on the prepared resistance spot welded joints in accordance with a method specified in JIS Z 3137. Welded joints that had a measured value equal to or greater than that of JIS class A (3.4 kN) are denoted by a symbol of "o", and welded joints that had a measured value less than that of JIS class A are denoted by a symbol of "×". In the present example, the instances of the symbol of "o" were rated as "good", and the instances of the symbol of "×" were rated as "poor". The evaluation results are shown in Table 3.

[Evaluation of TSS]

The evaluation of TSS was performed based on the shear-tension test. First, the TSS (tensile shear strength) was measured by performing a cross-tension test on the prepared resistance spot welded joints in accordance with a method specified in JIS Z 3136. Welded joints that had a measured value equal to or greater than that of JIS class A are denoted by a symbol of "o", and welded joints that had a measured value less than that of JIS class A are denoted by a symbol of "×".

Details are as follows. In the instance of the steel sheet with a tensile strength of the 780 MPa class, a welded joint that had a value of 11.2 kN or greater is denoted by a symbol of "o". In the instance of the steel sheets with a tensile strength of the 980 MPa class, welded joints that had a value of 11.9 kN or greater are denoted by the symbol of "o". In the instance of the steel sheets with a tensile strength of the 1180 MPa class, welded joints that had a value of 12.1 kN or greater are denoted by the symbol of "o". In the instance of the steel sheets with a tensile strength of the 1470 MPa class, welded joints that had a value of 11.4 kN or greater are denoted by the symbol of "o". In the instance of the steel sheets with a tensile strength of the 1800 MPa class, welded joints that had a value of 9.4 kN or greater are denoted by the symbol of "o". In the instance of the sheet combinations including overlapping steel sheets having different tensile strengths (sheet combinations d, e, k, and l), the determination was made based on the higher of the reference values (values of JIS class A).

In the present example, the instances of the symbol of "o" were rated as "good", and the instances of the symbol of "×" were rated as "poor". The evaluation results are shown in Table 3.

[Evaluation of Joint]

In the present example, an evaluation of the joints was performed by using the above-described evaluations of the CTS and the TSS. In Table 3, in the instance where the evaluations of the CTS and TSS were both "o", the evaluation of the joint was determined to be "∘ (pass)". On the other hand, in the instance where one of the evaluations of the CTS and TSS was "×" or where both of the evaluations of the CTS and TSS were "×", the evaluation of the joint was determined to be "× (fail)".

[Table 1]

| Steel Sheet | C | Si | Mn | P | S | N | O | Cu | Ni | Mo | Al | B | Ca | Cr | Ti | V | Nb | Notes |
|---|---|---|---|---|---|---|---|---|---|---|---|---|---|---|---|---|---|---|
| | | | | | | | | | | | | Chemical Composition (mass%) | | | | | | |
| A | 0.20 | 1.3 | 3.0 | 0.01 | 0.001 | 0.003 | 0.005 | 0.010 | 0.15 | 0.010 | 0.02 | 0.0006 | 0.002 | 0.20 | 0.005 | 0.006 | 0.008 | Steel sheet A |
| B | 0.10 | 0.2 | 4.0 | 0.01 | 0.001 | 0.002 | 0.005 | 0.010 | 0.15 | 0.010 | 0.02 | 0.0006 | 0.002 | 0.40 | 0.005 | 0.006 | 0.008 | Steel sheet B |
| C | 0.20 | 1.1 | 2.0 | 0.01 | 0.002 | 0.002 | 0.010 | 0.010 | 0.15 | 0.010 | 0.02 | 0.0006 | 0.005 | 0.20 | 0.010 | 0.050 | 0.008 | Steel sheet C |
| D | 0.13 | 0.9 | 3.5 | 0.01 | 0.001 | 0.005 | 0.005 | 0.200 | 0.30 | 0.010 | 0.03 | 0.0006 | 0.002 | 0.20 | 0.005 | 0.006 | 0.008 | Steel sheet D |
| E | 0.50 | 0.5 | 1.5 | 0.03 | 0.001 | 0.002 | 0.005 | 0.050 | 0.15 | 0.010 | 0.02 | 0.0006 | 0.002 | 0.20 | 0.005 | 0.006 | 0.008 | Steel sheet E |
| F | 0.30 | 1.5 | 2.5 | 0.01 | 0.001 | 0.003 | 0.005 | 0.010 | 0.15 | 0.010 | 0.02 | 0.0020 | 0.002 | 0.20 | 0.030 | 0.006 | 0.008 | Steel sheet F |
| G | 0.56 | 0.3 | 1.5 | 0.01 | 0.001 | 0.002 | 0.005 | 0.050 | 0.15 | 0.200 | 0.02 | 0.0006 | 0.002 | 0.20 | 0.005 | 0.006 | 0.008 | Steel sheet G |
| H | 0.40 | 1.2 | 2.0 | 0.01 | 0.001 | 0.002 | 0.005 | 0.010 | 0.15 | 0.010 | 0.02 | 0.0006 | 0.002 | 0.20 | 0.005 | 0.006 | 0.050 | Steel sheet H |
| I | 0.65 | 2.0 | 1.5 | 0.01 | 0.001 | 0.002 | 0.005 | 0.010 | 0.15 | 0.010 | 0.02 | 0.0006 | 0.002 | 0.20 | 0.005 | 0.006 | 0.008 | Comparative steel I |
| J | 0.40 | 0.5 | 5.0 | 0.01 | 0.001 | 0.002 | 0.005 | 0.010 | 0.15 | 0.010 | 0.02 | 0.0006 | 0.002 | 0.20 | 0.005 | 0.006 | 0.008 | Comparative steel J |
| K | 0.12 | 0.5 | 2.0 | 0.05 | 0.003 | 0.008 | 0.021 | 0.621 | 0.72 | 0.010 | 0.02 | 0.0008 | 0.002 | 0.35 | 0.005 | 0.006 | 0.008 | Steel sheet K |
| L | 0.12 | 0.9 | 1.8 | 0.01 | 0.001 | 0.002 | 0.007 | 0.010 | 0.15 | 0.700 | 0.81 | 0.0006 | 0.003 | 0.20 | 0.095 | 0.006 | 0.008 | Steel sheet L |
| M | 0.19 | 1.4 | 3.0 | 0.01 | 0.001 | 0.003 | 0.005 | - | - | - | - | - | - | - | - | - | - | Steel sheet M |
| N | 0.28 | 1.5 | 2.2 | 0.01 | 0.001 | 0.003 | 0.005 | - | - | - | - | - | - | - | - | - | - | Steel sheet N |

[Table 2]

| Sheet Combination | Overlapping Steel Sheet Positions | Steel Sheet | Steel Sheet Type | Tensile Strength | Sheet Thickness of Steel Sheet |
|---|---|---|---|---|---|
| a | First sheet | Cold rolled steel sheet | Steel sheet A | 1180 MPa class | 1.2 mm |
| | Second sheet | Cold rolled steel sheet | Steel sheet A | 1180 MPa class | 1.2 mm |
| b | First sheet | Cold rolled steel sheet | Steel sheet B | 1180 MPa class | 1.2 mm |
| | Second sheet | Cold rolled steel sheet | Steel sheet B | 1180 MPa class | 1.2 mm |
| c | First sheet | Cold rolled steel sheet | Steel sheet A | 1180 MPa class | 1.2 mm |
| | Second sheet | Cold rolled steel sheet | Steel sheet B | 1180 MPa class | 1.2 mm |
| d | First sheet | Cold rolled steel sheet | Steel sheet A | 1180 MPa class | 1.2 mm |
| | Second sheet | Cold rolled steel sheet | Steel sheet C | 980 MPa class | 1.2 mm |
| e | First sheet | Cold rolled steel sheet | Steel sheet A | 1180 MPa class | 1.2 mm |
| | Second sheet | Cold rolled steel sheet | Steel sheet D | 780 MPa class | 1.2 mm |
| f | First sheet | Cold rolled steel sheet | Steel sheet E | 1470 MPa class | 1.2 mm |
| | Second sheet | Cold rolled steel sheet | Steel sheet E | 1470 MPa class | 1.2 mm |
| g | First sheet | Cold rolled steel sheet | Steel sheet F | 1470 MPa class | 1.2 mm |
| | Second sheet | Cold rolled steel sheet | Steel sheet F | 1470 MPa class | 1.2 mm |
| h | First sheet | Cold rolled steel sheet | Steel sheet G | 1470 MPa class | 1.2 mm |
| | Second sheet | Cold rolled steel sheet | Steel sheet G | 1470 MPa class | 1.2 mm |
| i | First sheet | Cold rolled steel sheet | Steel sheet H | 1800 MPa class | 1.2 mm |
| | Second sheet | Cold rolled steel sheet | Steel sheet H | 1800 MPa class | 1.2 mm |
| j | First sheet | Cold rolled steel sheet | Comparative steel I | 1470 MPa class | 1.2 mm |
| | Second sheet | Cold rolled steel sheet | Comparative steel I | 1470 MPa class | 1.2 mm |
| k | First sheet | Cold rolled steel sheet | Steel sheet B | 1180 MPa class | 1.2 mm |
| | Second sheet | Cold rolled steel sheet | Comparative steel I | 1470 MPa class | 1.2 mm |
| l | First sheet | Cold rolled steel sheet | Steel sheet C | 1180 MPa class | 1.2 mm |
| | Second sheet | Cold rolled steel sheet | Comparative steel J | 1470 MPa class | 1.2 mm |
| m | First sheet | Cold rolled steel sheet | Steel sheet A | 1180 MPa class | 0.8 mm |
| | Second sheet | Cold rolled steel sheet | Steel sheet A | 1180 MPa class | 0.8 mm |
| | Third sheet | Cold rolled steel sheet | Steel sheet A | 1180 MPa class | 0.8 mm |
| n | First sheet | GA steel sheet | Steel sheet A | 1180 MPa class | 1.2 mm |
| | Second sheet | GA steel sheet | Steel sheet A | 1180 MPa class | 1.2 mm |
| o | First sheet | GA steel sheet | Steel sheet A | 1180 MPa class | 1.2 mm |
| | Second sheet | GA steel sheet | Steel sheet C | 1180 MPa class | 1.2 mm |
| p | First sheet | GA steel sheet | Steel sheet A | 1180 MPa class | 1.2 mm |
| | Second sheet | GA steel sheet | Steel sheet D | 1180 MPa class | 1.2 mm |
| q | First sheet | GA steel sheet | Steel sheet F | 1470 MPa class | 1.2 mm |
| | Second sheet | GA steel sheet | Steel sheet F | 1470 MPa class | 1.2 mm |
| r | First sheet | Cold rolled steel sheet | Steel sheet K | 980 MPa class | 1.2 mm |
| | Second sheet | Cold rolled steel sheet | Steel sheet L | 980 MPa class | 1.2 mm |

(continued)

| Sheet Combination | Overlapping Steel Sheet Positions | Steel Sheet | Steel Sheet Type | Tensile Strength | Sheet Thickness of Steel Sheet |
|---|---|---|---|---|---|
| s | First sheet | Cold rolled steel sheet | Steel sheet M | 1180 MPa class | 1.2 mm |
|  | Second sheet | Cold rolled steel sheet | Steel sheet M | 1180 MPa class | 1.2 mm |
| t | First sheet | Cold rolled steel sheet | Steel sheet N | 1470 MPa class | 1.2 mm |
|  | Second sheet | Cold rolled steel sheet | Steel sheet N | 1470 MPa class | 1.2 mm |

[Table 3]

| Welding No. | Sheet Combination | Electrode Force for All Steps | Main Current Application Step | | | Post-Heat Treatment Step | | | | | CTS (kN) | Evaluation of CTS | TSS (kN) | Evaluation of TSS | Evaluation of Joint | Notes |
|---|---|---|---|---|---|---|---|---|---|---|---|---|---|---|---|---|
| | | | | | | Cooling Process | | Heating Process | | | | | | | | |
| | | | Current Value Iw (kA) | Current Application Time tw (ms) | Electrode Force (kN) | Cooling Time tc (ms) | Electrode Force (kN) | Current Value It (kA) | Current Application Time tt (ms) | Electrode Force (kN) | | | | | | |
| 1 | a | Fixed | 7.0 | 140 | 3.0 | - | 3.0 | - | - | 3.0 | 1.8 | × | 5.9 | × | × | Comparative Example |
| 2 | a | Fixed | 7.0 | 140 | 3.0 | 1000 | 3.0 | 7.7 | 140 | 3.0 | 5.7 | ○ | 12.4 | ○ | ○ | Invention Example |
| 3 | a | Fixed | 7.0 | 140 | 3.0 | 900 | 3.0 | 15.0 | 240 | 3.0 | 1.4 | × | 6.7 | × | × | Comparative Example |
| 4 | a | Varied | 7.0 | 140 | 6.0 | 1000 | 3.0 | 8.1 | 200 | 5.0 | 3.7 | ○ | 12.3 | ○ | ○ | Invention Example |
| 5 | b | Fixed | 8.0 | 180 | 4.0 | 1500 | 4.0 | 8.4 | 120 | 4.0 | 7.0 | ○ | 13.0 | ○ | ○ | Invention Example |
| 6 | b | Fixed | 8.0 | 180 | 4.0 | 1000 | 4.0 | 8.8 | 300 | 4.0 | 6.8 | ○ | 14.4 | ○ | ○ | Invention Example |
| 7 | b | Fixed | 4.5 | 400 | 4.0 | 1500 | 4.0 | 7.0 | 200 | 4.0 | 3.9 | ○ | 12.9 | ○ | ○ | Invention Example |
| 8 | c | Fixed | 6.2 | 280 | 4.0 | 1200 | 4.0 | 6.6 | 120 | 4.0 | 7.1 | ○ | 12.8 | ○ | ○ | Invention Example |
| 9 | c | Fixed | 6.2 | 280 | 4.0 | 820 | 4.0 | 6.8 | 180 | 4.0 | 6.4 | ○ | 12.5 | ○ | ○ | Invention Example |
| 10 | c | Fixed | 5.3 | 400 | 4.0 | 1200 | 4.0 | 8.2 | 180 | 4.0 | 5.8 | ○ | 12.4 | ○ | ○ | Invention Example |
| 11 | d | Fixed | 6.5 | 250 | 4.0 | 900 | 4.0 | 8.0 | 140 | 4.0 | 7.5 | ○ | 13.5 | ○ | ○ | Invention Example |
| 12 | d | Fixed | 6.7 | 250 | 4.0 | 1000 | 4.0 | 16.0 | 200 | 4.0 | 2.5 | × | 10.1 | × | × | Comparative Example |
| 13 | e | Fixed | 6.7 | 280 | 4.0 | 900 | 4.0 | 6.5 | 120 | 4.0 | 3.1 | × | 8.8 | × | × | Comparative Example |
| 14 | e | Fixed | 6.5 | 280 | 4.0 | 1000 | 4.0 | 7.0 | 120 | 4.0 | 6.7 | ○ | 13.5 | ○ | ○ | Invention Example |

EP 4 574 324 A1

16

| Welding No. | Sheet Combination | Electrode Force for All Steps | Main Current Application Step | | | Post-Heat Treatment Step | | | | | CTS (kN) | Evaluation of CTS | TSS (kN) | Evaluation of TSS | Evaluation of Joint | Notes |
|---|---|---|---|---|---|---|---|---|---|---|---|---|---|---|---|---|
| | | | | | | Cooling Process | | Heating Process | | | | | | | | |
| | | | Current Value Iw (kA) | Current Application Time tw (ms) | Electrode Force (kN) | Cooling Time tc (ms) | Electrode Force (kN) | Current Value It (kA) | Current Application Time tt (ms) | Electrode Force (kN) | | | | | | |
| 15 | f | Fixed | 7.8 | 380 | 6.0 | 1600 | 6.0 | 8.3 | 250 | 6.0 | 4.4 | ○ | 11.9 | ○ | ○ | Invention Example |
| 16 | f | Fixed | 7.8 | 380 | 6.0 | 900 | 6.0 | 7.0 | 500 | 6.0 | 3.2 | × | 8.4 | × | × | Comparative Example |
| 17 | g | Fixed | 6.5 | 280 | 6.0 | 1000 | 6.0 | 7.8 | 160 | 6.0 | 6.3 | ○ | 11.5 | ○ | ○ | Invention Example |
| 18 | g | Varied | 6.7 | 300 | 3.0 | 1400 | 3.5 | 8.0 | 120 | 6.0 | 3.7 | ○ | 11.5 | ○ | ○ | Invention Example |
| 19 | g | Fixed | 6.5 | 280 | 6.0 | 1000 | 6.0 | 9.5 | 70 | 6.0 | 3.0 | × | 10.8 | × | × | Comparative Example |
| 20 | g | Fixed | 6.5 | 280 | 6.0 | 1000 | 6.0 | 6.9 | 140 | 6.0 | 5.7 | ○ | 12.2 | ○ | ○ | Invention Example |
| 21 | h | Fixed | 6.5 | 280 | 6.5 | 500 | 6.5 | 8.0 | 200 | 6.5 | 1.1 | × | 8.2 | × | × | Comparative Example |
| 22 | h | Fixed | 6.5 | 280 | 6.5 | 2000 | 6.5 | 11.0 | 300 | 6.5 | 3.9 | ○ | 11.6 | ○ | ○ | Invention Example |
| 23 | i | Fixed | 6.5 | 320 | 5.0 | 1200 | 5.0 | 9.0 | 80 | 5.0 | 3.1 | × | 8.8 | × | × | Comparative Example |
| 24 | i | Fixed | 6.5 | 320 | 5.0 | 1900 | 5.0 | 7.5 | 160 | 5.0 | 6.1 | ○ | 12.1 | ○ | ○ | Invention Example |
| 25 | i | Varied | 6.5 | 300 | 5.5 | 1000 | 3.5 | 8.0 | 120 | 6.0 | 3.5 | ○ | 9.7 | ○ | ○ | Invention Example |
| 26 | j | Fixed | 6.5 | 280 | 4.0 | 1000 | 4.0 | 12.0 | 150 | 4.0 | 1.8 | × | 7.9 | × | × | Comparative Example |
| 27 | k | Fixed | 6.5 | 280 | 4.0 | 1200 | 4.0 | 10.0 | 450 | 4.0 | 2.4 | × | 9.8 | × | × | Comparative Example |
| 28 | k | Fixed | 6.5 | 280 | 4.0 | 1000 | 4.0 | 10.0 | 160 | 4.0 | 5.4 | ○ | 12.4 | ○ | ○ | Invention Example |

17

(continued)

| Welding No. | Sheet Combination | Electrode Force for All Steps | Main Current Application Step | | | Post-Heat Treatment Step | | | | | CTS (kN) | Evaluation of CTS | TSS (kN) | Evaluation of TSS | Evaluation of Joint | Notes |
|---|---|---|---|---|---|---|---|---|---|---|---|---|---|---|---|---|
| | | | | | | Cooling Process | | Heating Process | | | | | | | | |
| | | | Current Value Iw (kA) | Current Application Time tw (ms) | Electrode Force (kN) | Cooling Time tc (ms) | Electrode Force (kN) | Current Value It (kA) | Current Application Time tt (ms) | Electrode Force (kN) | | | | | | |
| 29 | k | Fixed | 6.5 | 280 | 4.0 | 2000 | 4.0 | 7.5 | 120 | 4.0 | 7.1 | ○ | 12.7 | ○ | ○ | Invention Example |
| 30 | l | Fixed | 6.3 | 300 | 4.0 | 1600 | 4.0 | 15.0 | 300 | 4.0 | 2.5 | × | 9.6 | × | × | Comparative Example |
| 31 | l | Fixed | 6.5 | 280 | 4.0 | 1800 | 4.0 | 7.0 | 140 | 4.0 | 7.8 | ○ | 15.4 | ○ | ○ | Invention Example |
| 32 | m | Fixed | 6.5 | 280 | 3.5 | 1800 | 3.5 | 8.0 | 140 | 3.5 | 6.5 | ○ | 12.4 | ○ | ○ | Invention Example |
| 33 | n | Fixed | 6.5 | 280 | 3.5 | 1700 | 3.5 | 6.9 | 280 | 3.5 | 8.2 | ○ | 15.2 | ○ | ○ | Invention Example |
| 34 | n | Fixed | 6.7 | 250 | 3.5 | 1800 | 3.5 | 7.1 | 120 | 3.5 | 6.8 | ○ | 13.5 | ○ | ○ | Invention Example |
| 35 | o | Fixed | 6.5 | 280 | 3.5 | 2000 | 3.5 | 8.5 | 150 | 3.5 | 7.1 | ○ | 12.2 | ○ | ○ | Invention Example |
| 36 | p | Fixed | 6.5 | 280 | 4.0 | 900 | 4.0 | 8.1 | 280 | 4.0 | 5.5 | ○ | 14.5 | ○ | ○ | Invention Example |
| 37 | p | Fixed | 6.5 | 280 | 4.0 | 1600 | 4.0 | 7.0 | 140 | 4.0 | 7.1 | ○ | 14.1 | ○ | ○ | Invention Example |
| 38 | q | Fixed | 6.5 | 280 | 4.0 | 1500 | 4.0 | 7.0 | 140 | 4.0 | 5.9 | ○ | 14.4 | ○ | ○ | Invention Example |
| 39 | r | Fixed | 7.1 | 120 | 4.0 | 1200 | 4.0 | 8.0 | 200 | 4.0 | 6.8 | ○ | 14.7 | ○ | ○ | Invention Example |
| 40 | r | Fixed | 7.1 | 400 | 4.0 | 1400 | 4.0 | 9.0 | 280 | 4.0 | 7.2 | ○ | 14.5 | ○ | ○ | Invention Example |
| 41 | h | Fixed | 6.5 | 140 | 4.0 | 900 | 4.0 | 7.0 | 100 | 4.0 | 2.2 | × | 7.8 | × | × | Comparative Example |
| 42 | i | Fixed | 6.5 | 280 | 4.0 | 1200 | 4.0 | 9.0 | 310 | 4.0 | 1.9 | × | 8.9 | × | × | Comparative Example |

(continued)

| Welding No. | Sheet Combination | Electrode Force for All Steps | Main Current Application Step | | | Post-Heat Treatment Step | | | | | CTS (kN) | Evaluation of CTS | TSS (kN) | Evaluation of TSS | Evaluation of Joint | Notes |
|---|---|---|---|---|---|---|---|---|---|---|---|---|---|---|---|---|
| | | | | | | Cooling Process | | Heating Process | | | | | | | | |
| | | | Current Value Iw (kA) | Current Application Time tw (ms) | Electrode Force (kN) | Cooling Time tc (ms) | Electrode Force (kN) | Current Value It (kA) | Current Application Time tt (ms) | Electrode Force (kN) | | | | | | |
| 43 | s | Fixed | 7.0 | 140 | 4.0 | 1000 | 4.0 | 8.0 | 140 | 4.0 | 6.1 | ○ | 13.5 | ○ | ○ | Invention Example |
| 44 | s | Fixed | 7.0 | 140 | 4.0 | 1200 | 4.0 | 8.2 | 220 | 4.0 | 6.3 | ○ | 12.8 | ○ | ○ | Invention Example |
| 45 | t | Fixed | 7.0 | 180 | 4.0 | 1500 | 4.0 | 7.8 | 140 | 4.0 | 6.1 | ○ | 13.9 | ○ | ○ | Invention Example |
| 46 | a | Fixed | 7.0 | 140 | 3.0 | 1000 | 3.0 | 12.7 | 240 | 3.0 | 1.6 | × | 6.2 | × | × | Comparative Example |
| 47 | i | Fixed | 6.5 | 320 | 5.0 | 1000 | 5.0 | 11.8 | 160 | 5.0 | 2.8 | × | 9.1 | × | × | Comparative Example |

As is evident from Table 3, in the Invention Examples, the resistance spot welded joints obtained by resistance-spot-welding two or more steel sheets that included at least one galvanized steel sheet were good welded joints that had both excellent tensile shear strength and excellent cross tension strength. In contrast, good welded joints could not be obtained in Comparative Examples.

Reference Signs List

    1, 2 steel sheet
    3 nugget
    4, 5 welding electrode
    7 steel sheet faying surface

**Claims**

1.  A resistance spot welding method including holding a sheet combination of two or more overlapping steel sheets between a pair of welding electrodes and then applying a current through the sheet combination while applying a force thereto, to join the steel sheets together, the steel sheets including at least one high strength steel sheet,

    the high strength steel sheet being a steel sheet having a chemical composition containing, in mass%,
    C: 0.10 to 0.60%
    Si: 0.1 to 2.0%
    Mn: 1.5 to 4.0%
    P: 0.10% or less
    S: 0.005% or less
    N: 0.001 to 0.010%, and
    O: 0.03% or less, with a balance of Fe and incidental impurities,
    the resistance spot welding method comprising:

    a main current application step of applying a current having a current value Iw (kA) through the sheet combination to form a resistance spot weld; and
    a post-heat treatment step comprising a cooling process and a heating process, the cooling process following the main current application step and comprising cooling the resistance spot weld for a cooling time tc (ms), shown in formula (1), the heating process following the cooling process and comprising applying a current having a current value It (kA), shown in formula (2), through the resistance spot weld for a current application time tt (ms), shown in formula (3).

$$800 < tc \quad (1)$$

$$1.05 \times Iw \leq It \leq 1.80 \times Iw \quad (2)$$

$$100 < tt \leq 300 \quad (3)$$

2.  The resistance spot welding method according to Claim 1, wherein the chemical composition of the high strength steel sheet further contains, in mass%, one or more selected from

    Cu: 0.005 to 1.0%,
    Ni: 1.0% or less,
    Mo: 0.005 to 1.0%
    Al: 2.0% or less
    B: 0.0005 to 0.005%
    Ca: 0.005% or less
    Cr: 1.0% or less
    Ti: 0.003 to 0.20%,

V: 0.005 to 0.50%, and
Nb: 0.005 to 0.20%.

3. The resistance spot welding method according to Claim 1 or 2, wherein the high strength steel sheet comprises a galvanized layer on a surface of the steel sheet.

4. The resistance spot welding method according to Claim 1 or 2, wherein an electrode force for the main current application step and the post-heat treatment step is fixed.

5. The resistance spot welding method according to Claim 3, wherein an electrode force for the main current application step and the post-heat treatment step is fixed.

# FIG. 1

# FIG. 2

# EP 4 574 324 A1

<table>
<tr><td colspan="2">INTERNATIONAL SEARCH REPORT</td><td colspan="2">International application No.<br><br>**PCT/JP2023/033285**</td></tr>
<tr><td colspan="4">**A.  CLASSIFICATION OF SUBJECT MATTER**<br><br>***B23K 11/24***(2006.01)i; ***B23K 11/11***(2006.01)i; ***B23K 11/16***(2006.01)i; ***C22C 38/00***(2006.01)i; ***C22C 38/04***(2006.01)i; ***C22C 38/58***(2006.01)i<br>FI:    B23K11/24 315; B23K11/11 540; B23K11/16 311; C22C38/00 301R; C22C38/00 301T; C22C38/04; C22C38/58<br><br>According to International Patent Classification (IPC) or to both national classification and IPC</td></tr>
<tr><td colspan="4">**B.  FIELDS SEARCHED**</td></tr>
<tr><td colspan="4">Minimum documentation searched (classification system followed by classification symbols)<br><br>B23K11/24; B23K11/11; B23K11/16; C22C38/00; C22C38/04; C22C38/58</td></tr>
<tr><td colspan="4">Documentation searched other than minimum documentation to the extent that such documents are included in the fields searched<br><br>Published examined utility model applications of Japan 1922-1996<br>Published unexamined utility model applications of Japan 1971-2023<br>Registered utility model specifications of Japan 1996-2023<br>Published registered utility model applications of Japan 1994-2023</td></tr>
<tr><td colspan="4">Electronic data base consulted during the international search (name of data base and, where practicable, search terms used)</td></tr>
<tr><td colspan="4">**C.  DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>A</td><td colspan="2">WO 2021/177254 A1 (JFE STEEL CORP) 10 September 2021 (2021-09-10)<br>    paragraphs [0030]-[0087], fig. 1-4</td><td>1-5</td></tr>
<tr><td>A</td><td colspan="2">WO 2017/010071 A1 (JFE STEEL CORP) 19 January 2017 (2017-01-19)<br>    claims 1-6, paragraph [0061], fig. 1-3</td><td>1-5</td></tr>
<tr><td>A</td><td colspan="2">JP 2010-172946 A (JFE STEEL CORP) 12 August 2010 (2010-08-12)<br>    claims 1-5, paragraphs [0042], [0047], fig. 1-5</td><td>1-5</td></tr>
<tr><td>A</td><td colspan="2">JP 2016-55338 A (DAIHATSU MOTOR CO LTD) 21 April 2016 (2016-04-21)<br>    claims 1-2, paragraphs [0024], [0027], fig. 1-6</td><td>1-5</td></tr>
<tr><td>A</td><td colspan="2">JP 2021-154390 A (NIPPON STEEL CORP) 07 October 2021 (2021-10-07)<br>    claims 1-6, paragraphs [0052]-[0053], fig. 1-6</td><td>1-5</td></tr>
<tr><td colspan="2">☐ Further documents are listed in the continuation of Box C.</td><td colspan="2">☑ See patent family annex.</td></tr>
<tr><td colspan="2">*    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed</td><td colspan="2">"T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family</td></tr>
<tr><td colspan="2">Date of the actual completion of the international search<br><br>**01 November 2023**</td><td colspan="2">Date of mailing of the international search report<br><br>**14 November 2023**</td></tr>
<tr><td colspan="2">Name and mailing address of the ISA/JP<br><br>**Japan Patent Office (ISA/JP)**<br>**3-4-3 Kasumigaseki, Chiyoda-ku, Tokyo 100-8915**<br>**Japan**</td><td colspan="2">Authorized officer<br><br><br><br>Telephone No.</td></tr>
</table>

Form PCT/ISA/210 (second sheet) (January 2015)

23

## INTERNATIONAL SEARCH REPORT
### Information on patent family members

International application No.

**PCT/JP2023/033285**

| Patent document cited in search report | | | Publication date (day/month/year) | Patent family member(s) | | | Publication date (day/month/year) |
|---|---|---|---|---|---|---|---|
| WO | 2021/177254 | A1 | 10 September 2021 | EP | 4116455 | A1 | |
| | | | | paragraphs [0030]-[0095], fig. 1-4 | | | |
| | | | | CN | 115210027 | A | |
| | | | | KR | 10-2022-0127335 | A | |
| WO | 2017/010071 | A1 | 19 January 2017 | CN | 107848062 | A | |
| | | | | claims 1-6, paragraph [0106], fig. 1-3 | | | |
| | | | | KR | 10-2018-0011319 | A | |
| JP | 2010-172946 | A | 12 August 2010 | (Family: none) | | | |
| JP | 2016-55338 | A | 21 April 2016 | (Family: none) | | | |
| JP | 2021-154390 | A | 07 October 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5293227 B
- JP 2011067853 A
- JP 5151615 B